# EUROPÄISCHE PATENTANMELDUNG

(11) **EP 0 835 601 A2**
(43) Veröffentlichungstag der Anmeldung: **15.04.1998**
(21) Anmeldenummer: 97115882.9
(22) Anmeldetag: 12.09.1997
(51) Int. Cl.: A01B 49/06

(54) **Landwirtschaftliche Bestellkombination**

(30) Priorität: 10.10.1996 DE 19641765
(71) Anmelder: Amazonen-Werke H. Dreyer GmbH & Co. KG, D-49205 Hasbergen (DE)
(72) Erfinder: Dreyer, Heinz, Dr. Dipl.-Ing., 49205 Hasbergen (DE)

(57) **Zusammenfassung**

Landwirtschaftliche Bestellkombination, bestehend aus einer landwirtschaftlichen Zugmaschine mit Kraftheber, einem Tragrahmen mit einem Laufräder aufweisenden Fahrwerk und einer Zugdeichsel, die über eine Kupplungseinrichtung mit dem Kraftheber kuppelbar ist, zumindest einem an dem Tragrahmen jeweils mittels parallelogrammartige Halterungen angeordneten Bodenbearbeitungsgerät mit an einem Rahmen befestigten Bodenbearbeitungswerkzeugen und Bodenwalze sowie einer Säschare aufweisenden Sävorrichtung mit Vorratsbehälter, wobei die Bodenwalze gegenüber den Bodenbearbeitungswerkzeugen höhenverstellbar ist und zwar derart, daß über die Bodenwalze mittels einer Einstelleinrichtung die Arbeitstiefe der Bodenbearbeitungswerkzeuge einstellbar ist und wobei an dem Rahmen ein Planierschild vor den Bodenbearbeitungswerkzeugen angeordnet ist. Um während des Bearbeitungsvorganges auf einfache Weise die Arbeitshöhe bzw. -tiefe der Planierschiene und/oder der Bodenbearbeitungswerkzeuge einstellen zu können, ist vorgesehen, daß durch Anheben und Absenken des Drehpunktkrafthebers über die Zugdeichsel die Bearbeitungshöhe und/oder -tiefe der Planierschiene und/oder der Bodenbearbietungswerkzeuge einstellbar ist.

## Beschreibung

Die Erfindung betrifft eine landwirtschaftliche Bestellkombination gemäß des Oberbegriffes des Patentanspruches 1.

Eine derartige Bestellkombination ist in der nicht vorveröffentlichten Patentanmeldung P 196 20 016.4 beschrieben. Bei dieser Bestellkombination wird die Arbeitstiefe der Planierschiene mittels einer Spindel gegenüber dem Rahmen des Bodenbearbeitungsgerätes in der Höhe eingestellt. Die Höhe der Bodenbearbeitungswerkzeuge wird mittels einer Höhenverstellleinrichtung über eine hinter den Bodenbearbeitungswerkzeugen angeordneten Nachlaufwalze eingestellt.

Der Erfindung liegt die Aufgabe zugrund, während des Bearbeitungsvorganges auf einfache Weise die Arbeitshöhe bzw. -tiefe der Planierschiene und/oder der Bodenbearbeitungswerkzeuge vom Schleppersitz aus einstellen zu können.

Diese Aufgabe wird erfindungsgemäß dadurch gelöst, daß durch Anheben und Absenken des Dreipunktkrafthebers des Ackerschleppers über die Zugdeichsel die Bearbeitungshöhe und/oder -tiefe der Planierschiene und/oder der Bodenbearbeitungswerkzeuge einstellbar ist. Infolge dieser Maßnahmen kann auf einfache Weise mittels der Unterlenker des Dreipunktkrafthebers die Planierschiene und die Arbeitswerkzeuge des Bodenbearbeitungsgerätes in der Arbeitstiefe an die gerade herrschenden Einsatzbedingungen angepaßt werden. Somit kann vom Schleppersitz aus die Arbeitsweise der Planierschiene und der Bodenbearbeitungswerkzeuge den Gegebenheiten in optimaler Weise während der Überfahrt angepaßt werden. Die Planierschiene und die Bodenbearbeitungswerkzeuge sind über Einstellvorrichtungen in ihrer Grundeinstellung voreingestellt. Falls nun jedoch beispielsweise Verstopfungen auftreten sollten, kann durch einfaches Anheben der Unterlenker über die Zugdeichsel die Planierschiene und die Bodenbearbeitungswerkzeuge angehoben werden, so daß in einfacher Weise Verstopfungen beseitigt bzw. vermieden werden können. Dieses ist insbesondere dann erforderlich, wenn die Schlepperräder oder die Laufräder der landwirtschaftlichen Bestellkombination in einer tiefen Spur laufen. In diesem Fall kann vom Schleppersitz aus die Arbeitshöhe der Planierschiene und der Bodenbearbeitungswerkzeuge an diese veränderten Gegebenheiten angepaßt werden. Aufgrund der Ausbildung der Maschine hat man vom Schleppersitz aus eine sehr gute Sichtmöglichkeit auf die Planierschiene, die vor den Bodenbearbeitungswerkzeugen angeordnet sind.

Über die Unterlenker kann vom Schleppersitz aus die Höhe sehr fein eingestellt werden. Falls die Planierschiene zu tief eingestellt ist, wühlt sie, so daß durch Anheben auf eine höhere Einstellung eine gute Arbeit verrichtet wird. Falls die Planierschiene zu hoch eingestellt ist, verrichtet sie keine Arbeit. Durch Absenken der Maschine kann die Arbeit der Planierschiene optimiert werden.

In einfacher Weise kann die Bestellkombination über die Kupplungseinrichtung für die Zugdeichsel an den Unterlenker des Schlepperkrafthebers angekuppelt sein.

Um in einfacher Weise die Spuren der Laufräder der Bestellkombination zu beseitigen, ist vorgesehen, daß hinter den Laufrädern Spurlockerer zum Auflockern und Einebnen dieser Spuren angeordnet sind.

Weitere Einzelheiten der Erfindung sind der Beispielsbeschreibung und den Zeichnungen zu entnehmen. Hierbei zeigt die Zeichnung
die Bestellkombination in Seitenansicht und in Prinzipdarstellung.

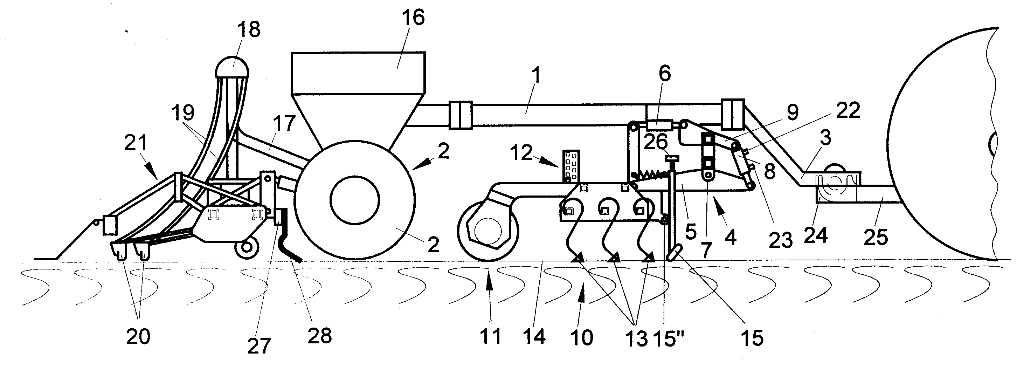

Die Bestellkombination gemäß Fig. 1, weist den Tragrahmen 1 mit dem Fahrwerk 2 und der Zugdeichsel 3 auf. Im vorderen Bereich des Tragrahmens 1 ist der Dreipunktkraftheber 4 angeordnet. Der Dreipunktkraftheber 4 ist als parallelogrammartige Halterung ausgebildet. Der Dreipunktkraftheber 4 weist die beiden unteren Lenker 5 sowie den Oberlenker 6 auf. Die Unterlenker 5 sind über das Gelenk 7 nach vorn verlängert. Die Vorderseiten der unteren Lenker 5 sind mit einem Verbindungsbalken miteinander verbunden. An diesem Verbindungsbalken greift der Hydraulikzylinder 8 an. Der Hydraulikzylinder 8 stützt sich am Rahmen9 des Dreipunktkrafthebers 4, der an dem Tragrahmen 1 befestigt ist, ab. An dem Dreipunktkraftheber 4 ist das Bodenbearbeitungsgerät 10 mit der Nachlaufwalze 11 angeordnet. Die Nachlaufwalze 11 ist gegenüber dem Bodenbearbeitungsgerät 10 über die Höhenverstellungseinrichtung 12 in der Höhenlage gegenüber dem Bodenbearbeitungsgerät 10 einstellbar, so daß die Bodenwalze 11 die Eindringtiefe der Bodenbearbeitungswerkzeuge 13 des Bodenbearbeitungsgerätes 10 in den Boden 14 bestimmt. Die Bodenbearbeitungswerkzeuge 13 sind in drei Querreihen hintereinander angeordnet. Vor den Bodenbearbeitungswerkzeugen 13 ist ein in Höhenrichtung verstellbarer Planierbalken 15, der sich über die Arbeitsbreite des Bodenbearbeitungsgerätes 10 erstreckt, am Rahmen 10 des Bodenbearbeitungsgeätes 10 angeordnet.

Dadurch, daß der Planierbalken 15 an dem über eine parallelogrammartige Halterung, die durch den Dreipunktkraftheber 4 gebildet wird, aufgehängten Rahmen 10' des Bodenbearbeitungsgerätes 10 befestigt ist, wird eine gute Höhenführung des Planierbalkenssss 15 und somit ein gutes Einebnen des Bodens erreicht. Das Planierschild 15 kann gegen die Kraft der Felder 15' beim Auftreffen auf Hindernisse die Gelenkachse 15'' nach hinten-oben ausweichen.

Auf der Rückseite des Tragrahmens 1 ist der Vorratsbehälter 16 für das Saatgut angeordnet. Im unteren Bereich des Vorratsbehälters 16 ist eine Dosiervorrichtung angeordnet, die das Saatgut über eine Schleuse in eine Förderleitung 17 einspeist. Diese Förderleitung 17 ist auf der einen Seite mit einem Gebläse und auf der anderen Seite mit einem Verteilerkopf 18 verbunden. Von dem Verteilerkopf 18 aus führen flexible Saatleitungen 19 zu hinter den Laufrädern 2 angeordneten Säscharen 20, die an einer Säschiene 21 in aufrechter Ebbene bewegbar mittels Gelenke angelenkt sind. Das Saatgut wird also pneumatisch von dem Vorratsbehälter 16 zu den Säscharen 20 gefördert. Die Sämaschine 21 ist mittels einer als Dreipunktkupplung ausgebildeten Halterung aushebbar und absenkbar an der Rückseite des Tragrahmens 1 angeordnet.

Der den Unterlenkern 6 des Dreipunktkrafthebers 4 zugeordnete Hydraulikzylinder 8 ist als doppeltwirkender Zylinder ausgebildet. Somit kann also, wenn der Anschluß 22 des Hydraulikzylinders 8 mit Druck beaufschlagt wird, das Bodenbearbeitungsgerät 10 mit der Walze 11 von dem Boden 14 abgehoben werden. Wenn jedoch der Hydraulikanschluß 23 des Hydraulikzylinders 8 mit Druck beaufschlagt wird, so wird die Bodenwalze 11 in Richtung des Bodens 14 gedrückt, so daß die Bodenwalze 11 mit zusätzlichem Druck in Richtung des Bodens 14 zu beaufschlagen ist. Der Hydraulikzylinder 8 ist über ein auf dem Schlepper, welcher die Bestellkombination zieht, angeordnetes Steuergerät zu bedienen. Somit ist also das auf die Bodenwalze 11 und das Bodenbearbeitungsgerät 10 vom Tragrahmen 1 übertragbare Belastungsgewicht mittels einer vom Schleppersitz aus betätigbaren Fernbedienungsvorrichtung veränderbar. Dieses Steuergerät kann auch mit einer elektronischen Regeleinrichtung verbunden sein, so daß über eine elektronische Regeleinrichtung das Steuergerät bzw. der Hydraulikzylinder entsprechend mit Druck beaufschlagbar ist, so daß über die elektronische Regeleinrichtung das von dem Tragrahmen 1 auf die Walze 11 übertragbare Belastungsgewicht entsprechend der jeweils vorherrschenden Bodenverhältnisse variierbar ist. Auch kann Gewicht von der Bodenwalze 11 und dem Bodenbearbeitungsgerät 10 auf den Tragrahmen 1 und die Laufräder 2 übertragen werden, so daß die Walze 11 entlastet wird.

Die Bodenbearbeitungswerkzeuge 13 sind als nicht angetriebene Bodenbearbeitungszinken, wie beispielsweise Kultivarzinken ausgebildet. Es ist jedoch auch möglich, die Bodenbearbeitungswerkzeuge als angetriebene Werkzeuge, beispielsweise einer Kreiselegge, Rüttelegge etc. auszubilden.

Die Bodenwalze 11 kann als Stabwalze, Zahnpackerwalze, Reifenpackerwalze, als Gußscheibenwalze etc. ausgebildet sein.

Die Zugdeichsel 3 ist über eine Kupplungseinrichtung 24 an die Unterlenker 25 des Schlepperkrafthebers angekuppelt. Mittels der beiden Unterlenker 25 des Dreipunktrafthebers wird die Zugdeichsel 3 angehoben oder abgesenkt, so daß die Bearbeitungshöhe und/oder -tiefe der Planierschiene 15 und der Bodenbearbeitungswerkzeuge 13 einstellbar ist. Der Planierschiene 15 ist die Höhenstelleinrichtung 26 zugeordnet.

Hinter den Laufrädern 2 der Bodenbearbeitungskombination sind am Rahmen 27 der Säschiene 21 die Spurlockerer 28 angeordnet.

Die Funktionsweise wie folgt:

Über die Höhenstelleinrichtung 26 wird die Arbeitstiefe der Planierschiene 15 eingestellt. Weiterhin wird mittels der Höheneinstellung 12 der Bodenwalze 11 die Arbeitstiefe der Bodenbearbeitungswerkzeuge 13 eingestellt. Falls nun während des Bearbeitungsvorganges es die Einsatzbedingungen erforderlich machen (falls Verstopfungen auftreten und die Planierschiene 15 bzw. die Bodenbearbeitungswerkzeuge 13 aufgrund der vorherrschenden Arbeitsbedingungen zu tief eingestellt sind bzw. zu Verstopfungen neigen) können über die Unterlenker 25 des Dreipunktkrafthebers vom Schleppersitz aus über die Zugdeichsel 3 die Planierschiene 15 und die Bodenbearbeitungswerkzeuge 13 angehoben werden. Nach Beseitigen dieser Verstopfungen bzw. des zu wühlen neigenden Bereiches können über die Unterlenker 25 die Planierschiene 15 und die Bodenbearbeitungswerkzeuge 13 wieder abgesenkt werden. Falls die Planierschiene 15 und die Bodenbearbeitungswerkzeuge zu hoch eingestellt sind, können durch Absenken der Unterlenker 25 über die Zugdeichsel 13 die Planierschiene 15 und die Bodenbearbeitungswerkzeuge 13 abgesenkt werden, so daß eine tiefere als die eingestellte Arbeitstiefe erreicht wird.

## Patentansprüche

1. Landwirtschaftliche Bestellkombination, bestehend aus einer landwirtschaftlichen Zugmaschine mit Kraftheber, einem Tragrahmen mit einem Laufräder aufweisenden Fahrwerk und einer Zugdeichsel, die über eine Kupplungseinrichtung mit dem Kraftheber kuppelbar ist, zumindest einem an dem Tragrahmen jeweils mittels parallelogrammartige Halterungen angeordneten Bodenbearbeitungsgerät mit an einem Rahmen befestigten Bodenbearbeitungswerkzeugen und Bodenwalze sowie einer Säschare aufweisenden Sävorrichtung mit Vorratsbehälter, wobei die Bodenwalze (11) gegenüber den Bodenbearbeitungswerkzeugen höhenverstellbar ist und zwar derart, daß über die Bodenwalze mittels einer Einstelleinrichtung (12) die Arbeitstiefe der Bodenbearbeitungswerkzeuge einstellbar ist und wobei an dem Rahmen ein Planierschild vor den Bodenbearbeitungswerkzeugen angeordnet ist, dadurch gekennzeichnet, daß durch Anheben und Absenken des Drehpunktkrafthebers (25) über die Zugdeichsel (3) die Bearbeitungshöhe und/oder -tiefe der Planierschiene (15) und/oder der Bodenbearbietungswerkzeuge (13) einstellbar ist.

2. Bestellkombination nach Anspruch 1, dadurch gekennzeichnet, daß dem Planierschild (15) eine Höheneinstelleinrichtung (26) zugeordnet ist.

3. Bestellkombination nach Anspruch 1, dadurch gekennzeichnet, daß die Kupplungseinrichtung (24) für die Zugdeichsel (3) an den Unterlenkern (25) des Schlepperkrafthebers angekuppelt ist.
